# EUROPEAN PATENT SPECIFICATION

(11) **EP 1 848 252 B1**
(45) Date of publication and mention of the grant of the patent: **13.05.2009**
(21) Application number: 07250999.5
(22) Date of filing: 09.03.2007
(51) Int. Cl.: H05B 41/32, G03B 15/05

(54) **Flash apparatus**
Blitzvorrichtung
Appareil à flash

(30) Priority: 21.04.2006 GB 0607817
(43) Date of publication of application: 24.10.2007
(73) Proprietor: Picsolve International Limited, Derby Derbyshire DE22 3NL (GB)
(72) Inventor: Marchant, Steve John c/o Picsolve International Limited, Derby Derbyshire DE22 3NL (GB)
(74) Representative: Lacey, Dean Andrew

(56) References cited:
- US-A- 3 725 734
- US-A- 3 917 975
- US-A- 5 250 977

## Description

The invention relates to a flash apparatus, particularly but not exclusively for use in photographic applications. One application of the apparatus is in the illumination of amusement rides so that people on the rides can be photographed whilst moving at high speed.

As the resolution of cameras has increased, the shutter speed must be increased to provide clearer photographs of moving subjects, for example on amusement rides. However, as the shutter speed increases, there is less time for light to enter the camera and it has become desirable to provide illumination in the form of a number of high power short-duration light pulses at a rapid repetition rate.

US 5 250 977 discloses a flash apparatus wherein two types of capacitors are involved. The charge of a primary main capacitor is boosted by means of plural high voltage boost capacitors which are sequentiallly switched.

It is therefore desirable to provide a flash apparatus with improved brightness and accuracy of timing of the flash and short flash duration.

According to the invention there is provided a flash apparatus including:
a plurality of first capacitors of a first specification, connectable to a power source;
a second capacitor of a second, different specification ;
switching means for selectively connecting each first capacitor to the second capacitor so that the second capacitor may be charged by that first capacitor;
a flash provider, capable of producing a flash of light when activated;
a trigger arrangement for causing the second capacitor to discharge to the flash provider thereby activating the flash provider; and
a controller for controlling the switching means and the trigger arrangement such that the second capacitor may be charged from a selected one of the first capacitors and discharged to the flash provider.

The first capacitors may be electrolytic capacitors. The first capacitors may be able to store up to between 500 and 600J of energy. The first capacitors may have a rating of about 450V. The first capacitors may have a capacitance of between 5000 and 6000 micro Farads. The first capacitors may be capable of discharging in about 30 milliseconds. The apparatus may include at least six first capacitors.

The second capacitor is preferably a pulse capacitor capable of a higher current discharge than are the first capacitors.

The second capacitor may be capable of discharging at least 350J and preferably at least 400J of energy to the flash tube. The second capacitor may be capable of discharging in less than 150 microseconds and preferably less than 100 microseconds. The second capacitor may be capable of operating at a higher voltage than are the first capacitors. The operating voltage of the second capacitor may be at least 1,000V and possibly at least 1400V. The second capacitor may have a capacitance of around 500 micro Farads.

The apparatus may also include a power source connected to the first capacitors, for charging the first capacitors. The first capacitors may be arranged in a bank such that all the first capacitors may be simultaneously connected to the power source.

The switching means may include a switch associated with each first capacitor, for selectively connecting that capacitor to the second capacitor.

The apparatus may further include a boost converter circuit associated with the second capacitor and arranged such that each first capacitor may be connected to the second capacitor via the boost converter circuit. The boost converter circuit may be configured for transferring a charge from the selected first capacitor to the second capacitor at a higher voltage. The boost converter circuit may include a first switch, which may be an insulated gate bipolar transistor ("IGBT"), an inductor and a second switch which may be a diode.

The boost converter may include a controller for switching the first switch on and off such that the current flowing from the first capacitor to the inductor builds up to a peak, and subsequently switching the first switch off, allowing the energy stored in the inductor to be transferred to the second capacitor via the second switch.

The trigger arrangement may include a small capacitor such as a 0.22 micro Farad, 400V capacitor, which is chargeable from the second capacitor while the second capacitor is charging.

The apparatus may include a flash head which contains the flash provider and the boost converter circuit. The flash provider may comprise a flash tube, which may be xenon filled. Preferably the second capacitor is connected to the flash provider via short, low impedance wiring within the flash head. Preferably the wiring is less than 150mm long. It may have an impedance of less than 2 milli Ohms. It may also include a 2 micro Henry air-cored series inductor for controlling the current.

The apparatus may further include a safety control for causing the second capacitor to discharge 1 second after it has been charged, even in the absence of the trigger signal.

According to the invention there is further provided a method of producing a flash for a photographic application, the method utilising an apparatus according to any of the previous definitions, the method including the steps of:
a) charging the first capacitors from the power source;
b) selecting one of the first capacitors and using the switching means to connect it to the second capacitor;
c) charging the second capacitor from the selected first capacitor; and
d) triggering the second capacitor to discharge to the flash provider, to activate the flash provider.

The method may further include repeating steps (b) to (d) for each of the remaining first capacitors, each first capacitor being connected to the second capacitor after the second capacitor has discharged to the flash provider, thereby providing a burst of flashes.

The step of charging the second capacitor from the first capacitor may include the use of a boost converter for transferring a charge from the selected first capacitor to the second capacitor at a high voltage. This charging step may take about 30 milliseconds.

The first capacitors may be charged to about 450V and about 500 to 600J, and may be charged simultaneously.

The second capacitor may discharge at least 350J and preferably at least 400J of energy to the flash tube. The second capacitor may discharge this energy in less than 150 microseconds and preferably less than 100 microseconds.

The method may include the step of causing the second capacitor to discharge 1 second after it has been charged, even in the absence of the trigger signal.

An embodiment of the invention will be described for the purpose of illustration only with reference to the accompanying drawings in which:
Fig.1 is a schematic illustration of a flash apparatus according to one embodiment of the invention; and
Fig. 2 is a graphical illustration of the shape of the discharge pulse of the second capacitor.

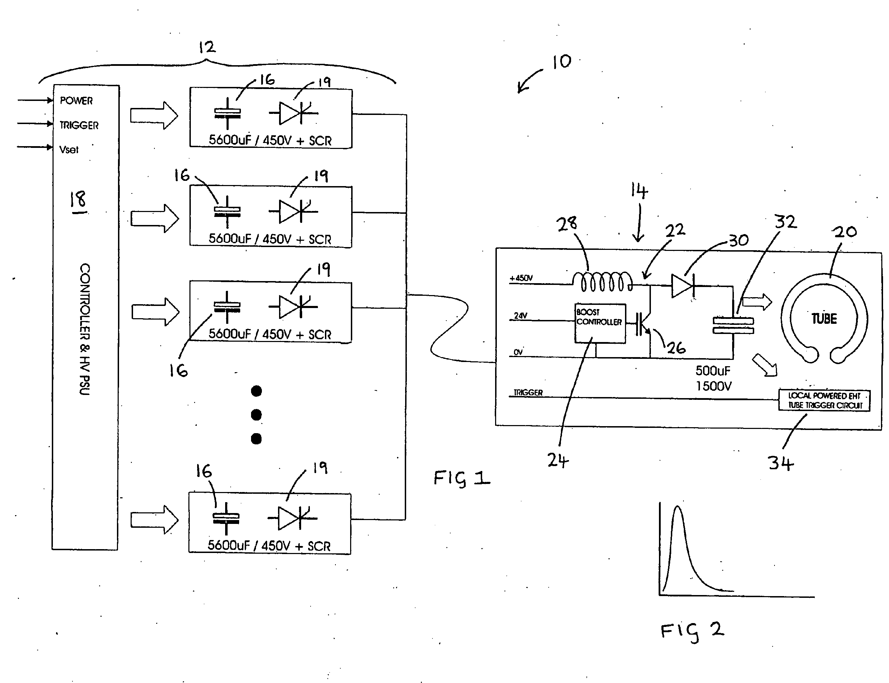

Fig.1 illustrates a flash apparatus 10 for delivering a rapid series of high power light pulses. A particular application of the flash apparatus is in high speed photography, for example for photographing amusement rides. In such applications, the subject to be photographed may be moving extremely fast. A very high shutter speed is required to obtain a clear image, and this requires a correspondingly high speed and high power flash to provide adequate illumination.

The flash apparatus 10 includes two main constituent parts: a power pack 12 and a remote head 14. The power pack 12 includes a bank of first capacitors 16. The first capacitors are electrolytic, 5,600 micro Farad capacitors having a rating of 450V and are widely available at a relatively low cost. Each of these first capacitors is able to supply a maximum of 567J.

The bank of capacitors 16 is connected to a power supply and controller unit 18. The power supply controller 18 is able to provide power to all of electrolytic capacitors 16 simultaneously, thereby charging those capacitors.

Each capacitor 16 is connected in series with its own switch in the form of a silicon controller rectifier or thyristor ("SCR") 19. The SCR 19 may be used to connect its respective capacitor 16 to the remote head 14, as explained in more detail below. The power supply controller 18 is able to selectively operate the respective switches to connect each electrolytic capacitor 16 to the remote head.

The remote head 14 includes a flash provider in the form of a flash tube 20 which, when triggered, is capable of providing high power, short duration illumination. The remote head 14 also includes a boost converter circuit 22 including a boost controller 24, an insulated gate bipolar transistor ("IGBT") 26, an inductor 28 and a diode 30.

The remote head 14 further includes a second capacitor in the form of a pulse capacitor 32. This is a high voltage, high current pulse discharge capacitor capable of discharging in under 100 microseconds when triggered.

The pulse capacitor 32 has a capacitance of 500 micro farads and is rated to around 1500 volts. It is capable of storing 540 joules of energy. The flash tube 20 is located close to this pulse capacitor.

The remote head 14 further includes a trigger arrangement in the form of an extra high tension tube trigger generator 34. The apparatus works as follows:

The electrolytic capacitors 16 are charged simultaneously from the power supply controller 18. The capacitors can store a maximum of 567J at 450V. When a burst of flashes is required, a first one of the electrolytic capacitors 16 is selected sequentially via its SCR 19 to charge the pulse capacitor 32 via the boost controller circuit 22.

The boost controller circuit 22 transfers the relatively low voltage charge from the selected electrolytic capacitor 16 to the pulse capacitor 32 at higher voltage. Since the pulse capacitor is 500 micro farads, a voltage boost of around 3 to 1 is possible, because the transfer of energy from the electrolytic capacitor 16 to the pulse capacitor 32 is achieved without significant energy loss. (567J at 450V converts to 1450V in the 500 micro farad pulse capacitor since the energy (½ CV²) is conserved).

The boost controller 24 in the boost converter circuit 22 switches the IGBT 26 on and off in such a way that it builds to a peak current of 150 amps flowing from the electrolytic capacitor 16 whilst it is on. The IGBT boost controller 24 then switches the IGBT off until the energy thus stored in the inductor 28 has been completely transferred to the pulse capacitor 32 via the series diode 30. The IGBT switching sequence continues until there is no voltage left across the electrolytic capacitor 16 at which time the boost controller 24 shuts down. Once the energy has been transferred in this way to the pulse capacitor 32, the apparatus is ready to be triggered to provide a flash of light.

In order to generate a trigger pulse for the flash tube, the extra high tension tube trigger generator 34 charges its own small capacitor (not illustrated) from the pulse capacitor 32 while the pulse capacitor 32 is charging. In this way, the flash head is ready for a trigger pulse from the power supply controller 18 as soon as the pulse capacitor 32 is fully charged.

Once the tube trigger generator operates, the energy from the pulse capacitor 32 is dissipated in the flash tube 20, producing a high power pulse of light. Once the pulse capacitor 32 has thus been discharged, the power supply controller 18 activates the SCR 19 for the next electrolytic capacitor 16 to connect that electrolytic capacitor to the boost converter circuit 22 and start the boost charging process again. The boost controller 24 starts once it detects that a fresh charged electrolytic capacitor 16 has been switched into the circuit by the power pack controller 18.

As a safety measure, if the remote head does not receive a trigger pulse from the power pack controller 18 within one second of charging the pulse capacitor 32, the system triggers the pulse capacitor to discharge anyway. As a further safety feature, if 24V power is removed from the remote head 14, any charge in the pulse capacitor 32 is dumped to a bank of resistors. The apparatus further includes an LED (not illustrated) inside the remote head 14 to indicate that the pulse capacitor has charge on it.

The apparatus is capable of a flash rate of 30 flashes per second with each flash typically having energy in excess of 400J, mean power of 4000KW and a duration of 100 microseconds. The time between flashes (about 30 milliseconds) is used to re-charge the pulse capacitor 32 from the next electrolytic capacitor 16.

A 2 micro Henry series inductor is included in the discharge path to limit currents, shape the discharge pulse and to bring the discharge time to 100 microseconds. This may be an air-cored series inductor with about five turns and a diameter of about 50mm. Fig. 2 shows the shape of the discharge pulse.

The embodiment as described above has particular advantages. It allows for a series of accurately timed, high power flashes whilst only using one expensive, highly rated pulse capacitor.

There is only a short path for current between the pulse capacitor 32 and the flash tube 20, therefore resistive losses are minimised and inductive effects are well controlled. The electrolytic capacitors 16 are able to discharge relatively slowly (over about 30 milliseconds) and therefore the low cost electrolytic capacitors' high equivalent series resistance and poor maximum discharge current handling capacity does not cause a problem, because the charge and discharge currents that they encounter are relatively low.

Various modifications may be made to the above described embodiment without departing from the scope of the invention. For example the values of capacitance, voltage, etc of the components may be altered, as may be the physical arrangements of the components.

## Claims

1. A flash apparatus (10) including:
a plurality of first capacitors (16) of a first specification, connectable to a power source (18);
a second capacitor (32) of a second, different specification;
switching means (19) for selectively connecting each first capacitor (16) to the second capacitor (32) so that the second capacitor (32) may be charged by that first capacitor (16);
a flash provider (20), capable of producing a flash of light when activated;
a trigger arrangement (34) for causing the second capacitor (32) to discharge to the flash provider (20) thereby activating the flash provider (20); and
a controller (18) for controlling the switching means (19) and the trigger arrangement (34) such that the second capacitor (32) may be charged from a selected one of the first capacitors (16) and discharged to the flash provider (20).

2. A flash apparatus according to claim 1 wherein the first capacitors are electrolytic capacitors.

3. A flash apparatus according to claim 1 or claim 2 wherein the first capacitors are able to store up to between 500 and 600J of energy, have a rating of about 450V and have a capacitance of between 5000 and 6000 micro Farads.

4. A flash apparatus according to any preceding claim wherein the first capacitors are capable of discharging in about 30 milliseconds.

5. A flash apparatus according to any preceding claim wherein the apparatus includes at least six first capacitors.

6. A flash apparatus according to any preceding claim wherein the second capacitor is a pulse capacitor capable of a higher current discharge than are the first capacitors.

7. A flash apparatus according to any preceding claim wherein the second capacitor is capable of discharging at least 350J of energy to the flash tube.

8. A flash apparatus according to any preceding claim wherein the second capacitor is capable of discharging in less than 150 microseconds, and preferably in less than 100 microseconds.

9. A flash apparatus according to any preceding claim wherein the second capacitor is capable of operating at a higher voltage than are the first capacitors.

10. A flash apparatus according to any preceding claim wherein the operating voltage of the second capacitor is at least 1,000V, and preferably at least 1400V.

11. A flash apparatus according to any preceding claim wherein the second capacitor has a capacitance of around 500 micro Farads.

12. A flash apparatus according to any preceding claim wherein the apparatus includes a power source connected to the first capacitors, for charging the first capacitors.

13. A flash apparatus according to claim 12 wherein the first capacitors are arranged in a bank such that all the first capacitors may be simultaneously connected to the power source.

14. A flash apparatus according to any preceding claim wherein the switching means includes a switch associated with each first capacitor, for selectively connecting that capacitor to the second capacitor.

15. A flash apparatus according to any preceding claim wherein the apparatus further includes a boost converter circuit associated with the second capacitor and arranged such that each first capacitor may be connected to the second capacitor via the boost converter circuit.

16. A flash apparatus according to claim 15 wherein the boost converter circuit is configured for transferring a charge from the selected first capacitor to the second capacitor at a higher voltage.

17. A flash apparatus according to claim 15 or claim 16 wherein the boost converter circuit includes a first switch, in the form of an insulated gate bipolar transistor ("IGBT"), an inductor and a second switch.

18. A flash apparatus according to claim 17 wherein the boost converter circuit includes a controller for switching the first switch on and off such that the current flowing from the first capacitor to the inductor builds up to a peak, and subsequently switching the first switch off, allowing the energy stored in the inductor to be transferred to the second capacitor via the second switch.

19. A flash apparatus according to any preceding claim wherein the trigger arrangement includes a small capacitor such as a 0.22 micro Farad, 400V capacitor, which is chargeable from the second capacitor while the second capacitor is charging.

20. A flash apparatus according to any preceding claim, wherein the second capacitor is connected to the flash provider via short, low impedance wiring within the flash head.

21. A flash apparatus according to claim 20 wherein the wiring is less than 150mm long and has an impedance of less than 2 milli Ohms, and wherein the wiring includes a 2 micro Henry air-cored series inductor for controlling the current.

22. A flash apparatus according to any preceding claim wherein the apparatus further includes a safety control for causing the second capacitor to discharge 1 second after it has been charged, even in the absence of the trigger signal.

23. A method of producing a flash for a photographic application, the method utilising an apparatus (10) according to any preceding claim, the method including the steps of:
a) charging the first capacitors (16) from the power source (18);
b) selecting one of the first capacitors (16) and using the switching means (19) to connect it to the second capacitor (32);
c) charging the second capacitor (32) from the selected first capacitor (16); and
d) triggering the second capacitor (32) to discharge to the flash provider (20), to activate the flash provider (20).

24. A method according to claim 23 wherein the method includes repeating steps (b) to (d) for each of the remaining first capacitors, each first capacitor being connected to the second capacitor after the second capacitor has discharged to the flash provider, thereby providing a burst of flashes.

25. A method according to claim 23 or claim 24 wherein the step of charging the second capacitor from the first capacitor includes the use of a boost converter for transferring a charge from the selected first capacitor to the second capacitor at a high voltage.

26. A method according to any of claims 23 to 25 wherein the first capacitors are charged to about 450V and about 500 to 600J, and are charged simultaneously.

27. A method according to any of claims 23 to 26 wherein the second capacitor discharges at least 350J of energy to the flash tube, and discharges its energy in less than 150 microseconds.

28. A method according to any of claims 23 to 27 wherein the method includes the step of causing the second capacitor to discharge 1 second after it has been charged, even in the absence of the trigger signal.

## Patentansprüche

1. Blitzvorrichtung (10), welche aufweist:
eine Vielzahl erster Kondensatoren (16) mit einer ersten Spezifikation, die an eine Energiequelle anschließbar sind; einen zweiten Kondensator (32) mit einer zweiten, unterschiedlichen Spezifikation;
ein Schaltmittel (19) zum selektiven Verbinden jedes ersten Kondensators (16) mit dem zweiten Kondensator (32), so dass der zweite Kondensator (32) durch diesen ersten Kondensator (16) geladen werden kann;
einen Blitzerzeuger (20), der einen Lichtblitz erzeugen kann, wenn er aktiviert wird;
eine Auslöseranordnung (34) zum Bewirken einer Entladung des zweiten Kondensators (32) an den Blitzerzeuger (20); und
eine Steuerungseinheit (18) zum Steuern des Schaltmittels (19) und der Auslöseranordnung (34) derart, dass der zweite Kondensator (32) von einem ausgewählten Kondensator der ersten Kondensatoren (16) geladen und an den Blitzerzeuger (20) entladen werden kann.

2. Blitzvorrichtung nach Anspruch 1, bei welcher die ersten Kondensatoren Elektrolyt-Kondensatoren sind.

3. Blitzvorrichtung nach Anspruch 1 oder 2, bei welcher die ersten Kondensatoren in der Lage sind, bis zu 500 bis 600J an Energie zu speichern, eine Belastbarkeit von etwa 450V haben und eine Kapazität von 5000 bis 6000µF (Mikro-Farad) haben.

4. Blitzvorrichtung nach einem der vorhergehenden Ansprüche, bei welcher die ersten Kondensatoren in der Lage sind, sich in etwa 30ms zu entladen.

5. Blitzvorrichtung nach einem der vorhergehenden Ansprüche, bei welcher die Vorrichtung mindestens sechs erste Kondensatoren enthält.

6. Blitzvorrichtung nach einem der vorhergehenden Ansprüche, bei welcher der zweite Kondensator ein Impuls-Kondensator ist, der zu einer höheren Stromentladung als die ersten Kondensatoren fähig ist.

7. Blitzvorrichtung nach einem der vorhergehenden Ansprüche, bei welcher der zweite Kondensator zu einer Entladung von mindestens 350J Energie an die Blitzröhre fähig ist.

8. Blitzvorrichtung nach einem der vorhergehenden Ansprüche, bei welcher der zweite Kondensator sich in weniger als 150µs (Mikro-Sekunden) und vorzugsweise in weniger als 100µs (Mikro-Sekunden) entladen kann.

9. Blitzvorrichtung nach einem der vorhergehenden Ansprüche, bei welcher der zweite Kondensator bei einer höheren Spannung betrieben werden kann als die ersten Kondensatoren.

10. Blitzvorrichtung nach einem der vorhergehenden Ansprüche, bei welcher die Betriebsspannung des zweiten Kondensators mindestens 1000V und vorzugsweise mindestens 1400V beträgt.

11. Blitzvorrichtung nach einem der vorhergehenden Ansprüche, bei welcher der zweite Kondensator eine Kapazität von etwa 500µF (Mikro-Farad) hat.

12. Blitzvorrichtung nach einem der vorhergehenden Ansprüche, bei welcher die Vorrichtung eine mit den ersten Kondensatoren verbundene Energiequelle zum Laden der ersten Kondensatoren hat.

13. Blitzvorrichtung nach Anspruch 12, bei welcher die ersten Kondensatoren in einer Bank angeordnet sind, so dass alle der ersten Kondensatoren gleichzeitig mit der Energiequelle verbunden werden können.

14. Blitzvorrichtung nach einem der vorhergehenden Ansprüche, bei welcher das Schaltmittel einen jedem der ersten Kondensatoren zugeordneten Schalter enthält zum selektiven Verbinden dieses Kondensators mit dem zweiten Kondensator.

15. Blitzvorrichtung nach einem der vorhergehenden Ansprüche, bei welcher die Vorrichtung außerdem eine Stromstoß-Wandlerschaltung enthält, die dem zweiten Kondensator zugeordnet und derart angeordnet ist, dass jeder erste Kondensator über die Stromstoß-Wandlerschaltung mit dem zweiten Kondensator verbunden werden kann.

16. Blitzvorrichtung nach Anspruch 15, bei welcher die Stromstoß-Wandlerschaltung für das Überführen einer Ladung von dem ausgewählten ersten Kondensator zu dem zweiten Kondensator bei einer höheren Spannung aufgebaut ist.

17. Blitzvorrichtung nach Anspruch 15 oder 16, bei welcher die Stromstoß-Wandlerschaltung einen ersten Schalter in Form eines bipolaren Transistors mit isoliertem Gate-Anschluss (IGBT), einen Induktor sowie einen zweiten Schalter enthält.

18. Blitzvorrichtung nach Anspruch 17, bei welcher die Stromstoß-Wandlerschaltung eine Steuerungseinheit enthält zum Ein- und Ausschalten des ersten Schalters derart, dass der von dem ersten Kondensator zu dem Induktor fließende Strom sich bis zu einer Spitze (Peak) aufbaut, und zum anschließenden Ausschalten des ersten Schalters, wobei der in dem Induktor gespeicherten Energie ermöglicht wird, über den zweiten Schalter zu dem zweiten Kondensator überführt zu werden.

19. Blitzvorrichtung nach einem der vorhergehenden Ansprüche, bei welcher die Auslöseranordnung einen kleinen Kondensator, z.B. mit 22µF (Mikro-Farad) und 400V, enthält, der von dem zweiten Kondensator aufladbar ist, während der zweite Kondensator beim Laden ist.

20. Blitzvorrichtung nach einem der vorhergehenden Ansprüche, bei welcher der zweite Kondensator über eine kurze Verdrahtung mit niedriger Impedanz in dem Blitzkopf mit dem Blitzerzeuger verbunden ist.

21. Blitzvorrichtung nach Anspruch 20, bei welcher die Verdrahtung weniger als 150mm lang ist und eine Impedanz von weniger als 2mΩ (Milli-Ohm) hat, und wobei die Verdrahtung einen Luftkern-Serieninduktor mit 2µH (Mikro-Henry) zum Steuern des Stroms enthält.

22. Blitzvorrichtung nach einem der vorhergehenden Ansprüche, bei welcher die Vorrichtung außerdem eine Sicherheits-Steuerung enthält zum Bewirken der Entladung des zweiten Kondensators 1 Sekunde nachdem er geladen wurde selbst dann, wenn kein Auslösersignal vorliegt.

23. Verfahren zum Erzeugen eines Blitzes für eine fotografische Anwendung, wobei das Verfahren eine Vorrichtung (10) gemäss einem der vorhergehenden Ansprüche verwendet und die folgenden Schritte aufweist:
a) Laden der ersten Kondensatoren (16) von der Energiequelle (18) aus;
b) Auswählen eines Kondensators von den ersten Kondensatoren (16) und Verwenden des Schaltmittels (19), um ihn mit dem zweiten Kondensator (32) zu verbinden;
c) Laden des zweiten Kondensators (32) von dem ausgewählten ersten Kondensator (16) aus; und
d) Auslösen der Entladung des zweiten Kondensators (32) an den Blitzerzeuger (20), um den Blitzerzeuger (20) zu aktivieren.

24. Verfahren nach Anspruch 23, bei welchem das Verfahren eine Wiederholung der Schritte (b) bis (d) für jeden der restlichen ersten Kondensatoren enthält, wobei jeder erste Kondensator mit dem zweiten Kondensator verbunden wird, nachdem der zweite Kondensator an den Blitzerzeuger entladen wurde, wodurch ein Anhäufung von Blitzen erzeugt wird.

25. Verfahren nach Anspruch 23 oder 24, bei welchem der Schritt des Ladens des zweiten Kondensators von dem ersten Kondensator die Verwendung eines Stromstoß-Wandlers beinhaltet, um eine Ladung von dem ausgewählten ersten Kondensator zu dem zweiten Kondensator bei einer hohen Spannung zu überführen.

26. Verfahren nach einem der Ansprüche 23 bis 25, bei welchem die ersten Kondensatoren auf etwa 450V und etwa 500 bis 600J aufgeladen werden und dabei gleichzeitig geladen werden.

27. Verfahren nach einem der Ansprüche 23 bis 26, bei welchem der zweite Kondensator mindestens 350J Energie an die Blitzröhre entlädt und seine Energie in weniger als 150µs (Mikro-Sekunden) entlädt.

28. Verfahren nach einem der Ansprüche 23 bis 27, bei welchem das Verfahren einen Schritt enthält zum Bewirken einer Entladung des zweiten Kondensators 1 Sekunde nachdem er geladen wurde selbst dann, wenn kein Auslösersignal vorliegt.

## Revendications

1. Appareil à flash (10) comprenant :
une pluralité de premiers condensateurs (16) ayant une première spécification, connectables à une source d'alimentation (18) ;
un second condensateur (32) ayant une seconde spécification différente ;
des moyens de commutation (19) pour connecter sélectivement chaque premier condensateur (16) au second condensateur (32) afin que le second condensateur (32) puisse être chargé par le premier condensateur (16) ;
un fournisseur de flash (20), capable de produire un flash de lumière lorsqu'il est activé ;
un mécanisme de déclenchement (34) pour entraîner une décharge du second condensateur (32) sur le fournisseur de flash (20), activant ainsi le fournisseur de flash (20) ; et
un contrôleur (18) pour contrôler les moyens de commutation (16) et le mécanisme de déclenchement (34) de telle sorte que le second condensateur (32) puisse être chargé à partir d'un condensateur sélectionné parmi les premiers condensateurs (16) et déchargé vers le fournisseur de flash (20).

2. Appareil à flash selon la revendication 1, dans lequel les premiers condensateurs sont des condensateurs électrolytiques.

3. Appareil à flash selon la revendication 1 ou la revendication 2, dans lequel les premiers condensateurs sont aptes à stocker entre 500 et 600J d'énergie, ont une tension nominale d'environ 450V et une capacité comprise entre 5000 et 6000 microfarads.

4. Appareil à flash selon l'une quelconque des revendications précédentes, dans lequel les premiers condensateurs sont aptes à se décharger en 30 millisecondes environ.

5. Appareil à flash selon l'une quelconque des revendications précédentes, dans lequel l'appareil comprend au moins six premiers condensateurs.

6. Appareil à flash selon l'une quelconque des revendications précédentes, dans lequel le second condensateur est un condensateur à impulsions capable de décharger un courant plus élevé que les premiers condensateurs.

7. Appareil à flash selon l'une quelconque des revendications précédentes, dans lequel le second condensateur est capable de décharger au moins 350J d'énergie vers le tube à flash.

8. Appareil à flash selon l'une quelconque des revendications précédentes, dans lequel le second condensateur est capable de se décharger en moins de 150 microsecondes, et de préférence, en moins de 100 microsecondes.

9. Appareil à flash selon l'une quelconque des revendications précédentes, dans lequel le second condensateur est capable de fonctionner à une tension plus élevée que les premiers condensateurs.

10. Appareil à flash selon l'une quelconque des revendications précédentes, dans lequel la tension de fonctionnement du second condensateur est d'au moins 1 000 V, et de préférence, d'au moins 1400 V.

11. Appareil à flash selon l'une quelconque des revendications précédentes, dans lequel le second condensateur a une capacité d'environ 500 microfarads.

12. Appareil à flash selon l'une quelconque des revendications précédentes, dans lequel l'appareil comprend une source d'alimentation connectée aux premiers condensateurs, pour charger les premiers condensateurs.

13. Appareil à flash selon la revendication 12, dans lequel les premiers condensateurs sont agencés dans une batterie de telle sorte que l'ensemble des premiers condensateurs puissent être connectés simultanément à la source d'alimentation.

14. Appareil à flash selon l'une quelconque des revendications précédentes, dans lequel les moyens de commutation comprennent un interrupteur associé à chaque premier condensateur, pour connecter sélectivement le condensateur au second condensateur.

15. Appareil à flash selon l'une quelconque des revendications précédentes, dans lequel l'appareil comprend en outre un circuit convertisseur élévateur de tension associé au second condensateur et agencé de telle sorte que chaque premier condensateur puisse être connecté au second condensateur via le circuit convertisseur élévateur de tension.

16. Appareil à flash selon la revendication 15, dans lequel le circuit convertisseur élévateur de tension est configuré pour transférer une charge du premier condensateur sélectionné au second condensateur à une tension plus élevée.

17. Appareil à flash selon la revendication 15 ou la revendication 16, dans lequel le circuit convertisseur élévateur de tension comprend un premier interrupteur, sous la forme d'un transistor bipolaire à grille isolée ("IGBT"), un inducteur et un second interrupteur.

18. Appareil à flash selon la revendication 17, dans lequel le circuit convertisseur élévateur de tension comprend un contrôleur pour activer et désactiver le premier interrupteur de telle sorte que le courant passant du premier condensateur à l'inducteur s'accumule à un pic, et activer ensuite le premier interrupteur, ce qui permet à l'énergie stockée dans l'inducteur d'être transférée vers le second condensateur via le second interrupteur.

19. Appareil à flash selon l'une quelconque des revendications précédentes, dans lequel le mécanisme de déclenchement comprend un petit condensateur tel qu'un condensateur à 0,22 microfarad, 400V, qui peut être chargé à partir du second condensateur tandis que le second condensateur est en cours de charge.

20. Appareil à flash selon l'une quelconque des revendications précédentes, dans lequel le second condensateur est connecté au fournisseur de flash via un câblage court de faible impédance à l'intérieur de la tête de flash.

21. Appareil à flash selon la revendication 20, dans lequel le câblage fait moins de 150 mm de long et a une impédance de moins de 2 milliohms, et dans lequel le câblage comprend un inducteur en série à air de 2 micro-Henry pour contrôler le courant.

22. Appareil à flash selon l'une quelconque des revendications précédentes, dans lequel l'appareil comprend en outre une commande de sécurité pour entraîner la décharge du second condensateur 1 seconde après qu'il a été chargé, même en l'absence du signal de déclenchement.

23. Procédé de production d'un flash pour une application photographique, le procédé utilisant un appareil (10) selon l'une quelconque des revendications précédentes, le procédé comprenant les étapes consistant à:
a) charger les premiers condensateurs (16) à partir de la source d'alimentation (18) ;
b) sélectionner un des premiers condensateurs (16) et utiliser les moyens de commutation (19) pour le connecter au second condensateur (32) ;
c) charger le second condensateur (32) à partir du premier condensateur (16) sélectionné ; et
d) déclencher le second condensateur (32) pour qu'il se décharge vers le fournisseur de flash (20), pour activer le fournisseur de flash (20).

24. Procédé selon la revendication 23, dans lequel le procédé consiste à répéter les étapes (b) à (d) pour chacun des premiers condensateurs restants, chaque premier condensateur étant connecté au second condensateur une fois que le second condensateur s'est déchargé vers le fournisseur de flash, fournissant ainsi une rafale de flashs.

25. Procédé selon la revendication 23 ou la revendication 24, dans lequel l'étape de charge du second condensateur à partir du premier condensateur comprend l'utilisation d'un convertisseur élévateur de tension pour transférer une charge du premier condensateur sélectionné vers le second condensateur à une tension élevée.

26. Procédé selon l'une quelconque des revendications 23 à 25, dans lequel les premiers condensateurs sont chargés à environ 450V et environ 500 à 600J, et sont chargés simultanément.

27. Procédé selon l'une quelconque des revendications 23 à 26, dans lequel le second condensateur décharge au moins 350J d'énergie vers le tube à flash, et décharge son énergie en moins de 150 microsecondes.

28. Procédé selon l'une quelconque des revendications 23 à 27, dans lequel le procédé comprend l'étape consistant à entraîner la décharge du second condensateur 1 seconde après qu'il a été chargé, même en l'absence du signal de déclenchement.
